# EUROPÄISCHE PATENTSCHRIFT

(11) **EP 2 983 963 B1**
(45) Veröffentlichungstag und Bekanntmachung des Hinweises auf die Patenterteilung: **23.08.2017**
(21) Anmeldenummer: 14717702.6
(22) Anmeldetag: 02.04.2014
(51) Int. Cl.: B62D 15/02, G01D 5/20, G01B 7/00

(54) **SENSOREINRICHTUNG, LENKWINKELSENSOREINRICHTUNG, VERFAHREN ZUM BESTIMMEN DER LAGE EINES METALLOBJEKTS**
SENSOR DEVICE, STEERING ANGLE SENSOR DEVICE, AND METHOD FOR DETERMINING THE POSITION OF A METAL OBJECT
DISPOSITIF DE DÉTECTION, DISPOSITIF DE DÉTECTION D'ANGLE DE BRAQUAGE, PROCÉDÉ POUR DÉTERMINER L'EMPLACEMENT D'UN OBJET MÉTALLIQUE

(30) Priorität: 11.04.2013 DE 102013206426
(43) Veröffentlichungstag der Anmeldung: 17.02.2016
(73) Patentinhaber: Robert Bosch GmbH, 70442 Stuttgart (DE)
(72) Erfinder: FRESE, Volker, 71717 Beilstein (DE)
(86) Internationale Anmeldenummer: PCT/EP2014/056586
(87) Internationale Veröffentlichungsnummer: WO 2014/166792

(56) Entgegenhaltungen:
- WO-A1-02/48654
- DE-A1- 2 640 057
- DE-A1- 3 425 354
- FR-A1- 2 783 910
- US-A- 4 451 780
- US-A1- 2003 038 628

## Beschreibung

Die Erfindung betrifft eine Sensoreinrichtung zum Bestimmen der Lage eines Metallkörpers, insbesondere eines Stellglieds einer Lenkeinrichtung eines Kraftfahrzeugs, mit wenigstens einem Wirbelstromsensor, der wenigstens eine Erregerspule zum Erzeugen eines hochfrequenten elektromagnetischen Wechselfeldes und wenigstens eine Einrichtung zum Betreiben der Spule und zum Erfassen einer Impedanz, insbesondere einer Impedanzänderung, der Spule aufweist, und mit einer Auswertereinrichtung, die anhand der erfassten Impedanz die Lage des Metallkörpers bezüglich der Spule bestimmt.

Ferner betrifft die Erfindung eine Lenkwinkelsensoreinrichtung zum Erfassen des Lenkwinkels eines Kraftfahrzeugs, mit einem den Lenkwinkel bestimmenden Stellglied, insbesondere Lenkwelle, auf dem wenigstens ein, insbesondere mehrere Metallkörper, insbesondere gleichmäßig verteilt angeordnet sind, und mit einer Sensoreinrichtung zum Erfassen der Lage des wenigstens einen Metallkörpers.

Weiterhin betrifft die Erfindung ein Verfahren zum Bestimmen der Lage eines Metallkörpers, insbesondere eines Stellglieds einer Lenkeinrichtung des Kraftfahrzeugs, mittels wenigstens eines Wirbelstromsensors, der wenigstens eine Spule aufweist, die zum Erzeugen eines hochfrequenten elektromagnetischen Wechselfeldes und mit einem hochfrequenten Wechselstrom gespeist wird, und mittels einer Einrichtung, mit der eine Impedanz, insbesondere einer Impedanzänderung der Spule erfasst wird, wobei die Lage des Metallkörpers bezüglich der Spule in Abhängigkeit von der erfassten Impedanz bestimmt wird.

### Stand der Technik

Sensoreinrichtungen und Verfahren zum Bestimmen der Lage von Metallkörpern sind aus dem Stand der Technik bekannt.

Die DE 103 28 122 A1 offenbart beispielsweise einen Näherungssensor vom Hochfrequenzschwingungstyp,und richtet sich im Besonderen auf einen Näherungssensor mit charakteristischer Positionierungsstruktur für einen Spulenkörper und einen Kern.

Die FR 2783910 A1 offenbart einen induktiven Sensor der einen Magnetkern und zwei Spulen umfasst. Um den Abstand des Sensor zu einem elektrisch leitenden Gegenstand zu erfassen wird ein Wechselstrom durch die Spulen geleitet, wobei dann die Differenz zwischen den Impedanzen der Spulen ermittelt wird.

Wirbelstromsensoren weisen eine Spule auf, die mit einem hochfrequenten Wechselstrom gespeist wird, wodurch ein elektromagnetisches Wechselfeld um die Spule herum ausgebildet wird. Die Feldlinien des hochfrequenten Wechselfeldes treten dabei aus der Sensorebene heraus. Wenn sich ein elektrisch leitfähiges Objekt, insbesondere ein Metallkörper, dem Wirbelstromsensor nähert, induziert das Wechselfeld Wirbelströme in den Metallkörper. Diese Wirbelströme bilden selbst ein eigenes elektromagnetisches Feld, welches dem Spulenfeld entgegenwirkt, wodurch sich die Impedanz oder Induktivität der Spule verändert. Dabei ändert sich die Impedanz der Spule proportional zur Entfernung des Metallkörpers zu der Spule, so dass auf Basis der Impedanz oder Impedanzänderung der Abstand oder eine Abstandsänderung des Metallkörpers von der Spule bestimmbar ist. Zum Speisen beziehungsweise Betreiben der Spule mit dem hochfrequenten Wechselstrom und zum Erfassen einer Impedanz beziehungsweise Impedanzänderung der Spule weist der Wirbelstromsensor in der Regel eine entsprechende Einrichtung auf, die von einem oder mehreren elektrischen/elektronischen Bauteilen gebildet werden kann.

Heutzutage wird angestrebt, entsprechende Wirbelstromsensoren beziehungsweise Sensoreinrichtungen möglichst klein zu gestalten, um Bauraum, insbesondere im Kraftfahrzeug, zu sparen. Dadurch werden entsprechend kleine Leiterbahngeometrien für derartige Wirbelstromsensoren notwendig. Diese weisen jedoch eine geringe Induktivität auf. Die sich daraus ergebenden Schwingkreise müssen daher mit hohen Frequenzen von bis zu 100 MHz betrieben werden. Um diese Frequenz mit Frequenzzählern auswerten zu können, muss die Auswertereinrichtung ebenfalls mit einer entsprechend hohen Frequenz arbeiten. Üblicherweise in der Automobilindustrie verwendete Auswertereinrichtungen beziehungsweise Recheneinheiten sind nicht in der Lage, ohne Weiteres mit derart hohen Frequenzen umzugehen. Hierzu werden sogenannte Highend-Auswerteeinrichtungen benötigt, die sich jedoch in den Herstellungskosten unangenehm niederschlagen.

### Offenbarung der Erfindung

Die erfindungsgemäße Sensoreinrichtung mit den Merkmalen des Anspruchs 1 hat den Vorteil, dass trotz einer geringen Induktivität der Spule und der damit einhergehenden hohen Frequenz einfache Recheneinheiten beziehungsweise Mikrocontroller zur Auswertung der Impedanzdaten zum Bestimmen der Lage des Metallkörpers verwendet werden können. Erfindungsgemäß ist hierzu vorgesehen, dass die Sensoreinrichtung einen Referenzwirbelstromsensor aufweist, der wenigstens eine Referenzspule und wenigstens eine Referenzeinrichtung zum Erfassen einer Impedanz der Spule aufweist, und der derart ausgebildet und/oder ausgerichtet ist, dass ein elektromagnetisches Wechselfeld metallkörperfrei ist, wobei die Auswertereinrichtung dazu ausgebildet ist, aus von den Einrichtungen erfassten Impedanzen, die als Signale mit entsprechenden Frequenzen ausgegeben werden, eine Schwebung zu bilden und in Abhängigkeit der Schwebung die Lage des Metallkörpers zu bestimmen. Es ist also vorgesehen, dass zusätzlich zum Wirbelstromsensor ein Referenz-Wirbelstromsensor vorgesehen ist, der derart ausgerichtet beziehungsweise angeordnet ist, dass sein hochfrequentes Wechselfeld nicht in den Bereich des Metallkörpers gelangt. Die Einrichtung des Referenz-Wirbelstromsensors bestimmt somit eine Referenzimpedanz entsprechend der hochfrequenten Einspeisung der Spule. Aus den Frequenzen, die von der Messeinrichtung des Referenz-Wirbelstromsensors und des Wirbelstromsensors erfasst werden, bildet die Auswerteeinrichtung die sogenannte Schwebung. Hierunter ist die Resultierende einer additiven Überlagerung (Superposition) der Signale der Messwerteinrichtungen zu verstehen, die sich in ihrer Frequenz in Abhängigkeit von der Nähe des Metallkörpers zu dem Wirbelstromsensor unterscheiden. Die Schwebung weist im Vergleich zu den erfassten Frequenzen eine sehr viel geringere Frequenz auf, die auch mit einfachen Recheneinheiten, wie sie häufig im Automobilbau Anwendung finden, ausgewertet werden. Dadurch wird auf einfache Art und Weise die Auswertung auch hochfrequenter Signale der Messeinrichtungen möglich.

Besonders bevorzugt ist vorgesehen, dass die Auswerteeinrichtung einen Flipflop-Baustein aufweist. Mithilfe des Flipflop-Bausteins können die erfassten Frequenzen beziehungsweise Signale der Messeinrichtungen auf einfache und kostengünstige Art und Weise zu der Schwebung zusammengeführt werden.

Weiterhin ist bevorzugt vorgesehen, dass die Sensoreinrichtung zwei Oszilatoreinrichtungen aufweist, von denen eine mit einem Takteingang des Flipflop-Bausteins und die andere mit einem Mastereingang des Flipflop-Bausteins verbunden ist. Die Osziliatoreinrichtungen dienen zunächst einmal zur Erzeugung der hochfrequenten Stromeinspeisung in die jeweilige Spule. Durch die vorteilhafte Verschaltung mit dem Flipflop-Baustein wird die Schwebung bevorzugt an einem Slave-Ausgang des Flipflop-Bausteins erzeugt.

Gemäß einer bevorzugten Weiterbildung der Erfindung ist vorgesehen, dass die Einrichtung und die Referenzeinrichtung jeweils einen Schwingkreis mit einem Inverter aufweisen. Durch Ansteuerung des Inverters kann auf einfache Art und Weise eine Schwingung beziehungsweise Resonanzfrequenz in dem jeweiligen Schwingkreis erzeugt werden. Insbesondere können hierdurch die zuvor genannten Oszilatoreinrichtungen auf kostengünstige Art und Weise dargestellt werden.

Die erfindungsgemäße Lenkwinkelsensoreinrichtung mit den Merkmalen des Anspruchs 4 zeichnet sich durch die oben beschriebene Sensoreinrichtung aus. Es ergeben sich hierdurch die bereits genannten Vorteile. Der oder die zu erfassenden Metallkörper sind dabei zweckmäßigerweise gleichmäßig, beispielsweise über den Umfang einer Lenkwelle/-Stange verteilt angeordnet, so dass mittels der Sensoreinrichtung eine Rotation und/oder Winkellage der Lenkwelle erfassbar ist.

Das erfindungsgemäße Verfahren mit den Merkmalen des Anspruchs 5 zeichnet sich dadurch aus, dass ein Referenz-Wirbelstromsensor mit einer Referenzspule und einer Referenzeinrichtung vorgesehen wird, wobei die Spule mit einem hochfrequenten Wechselstrom wie die Spule des Wirbelstromsensors gespeist wird, und eine Impedanz der Spule des Referenz-Wirbelstromsensors mittels einer Messeinrichtung des Referenz-Wirbelstromsensors erfasst wird, und wobei aus den erfassten Impedanz(-Signalen) eine Schwebung gebildet wird, in deren Abhängigkeit die Lage des Metallkörpers bestimmt wird. Es ergeben sich hierdurch die bereits genannten Vorteile.

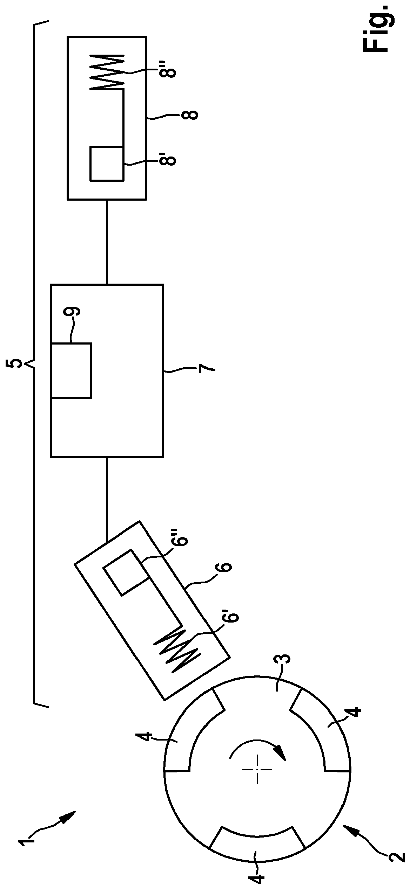

Im Folgenden soll die Erfindung anhand der Zeichnung näher erläutert werden. Dazu zeigt die einzige
- Figur: ein Ausführungsbeispiel einer vorteilhaften Lenkwinkelsensoreinrichtung in einer schematischen Darstellung.

Die Figur zeigt in einer schematischen Darstellung eine Lenkwinkelsensoreinrichtung 1 eines Kraftfahrzeugs, die zum Erfassen eines aktuellen Lenkwinkels des Kraftfahrzeugs dient. Dabei weist das Kraftfahrzeug ein Stellglied 2 auf, das in dem vorliegenden Ausführungsbeispiel als Lenkwelle 3 ausgebildet ist. An der Lenkstange 3 sind drei Metallkörper 4 angeordnet. Die Metallkörper 4 sind dabei gleichmäßig über den Umfang der Lenkwelle verteilt angeordnet. Zum Bestimmen der Winkellage und/oder einer Winkellageänderung der Lenkwelle 3 ist eine Sensoreinrichtung 5 vorgesehen.

Die Sensoreinrichtung 5 weist einen Wirbelstromsensor 6, eine Auswerteeinrichtung 7 und einen Referenz-Wirbelstromsensor 8 auf. Beide Wirbelstromsensoren 6 und 8 weisen jeweils eine Spule 6' beziehungsweise Referenzspule 8' sowie eine Einrichtung 6" beziehungsweise Referenzeinrichtung 8" auf.

Die Auswerteeinrichtung 7 steuert die Wirbelstromsensoren 6 und 8 derart an, dass die jeweilige Spule 6' beziehungsweise 8' durch die Einrichtung 6" beziehungsweise 8" mit einem hochfrequenten Wechselstrom gespeist wird, wodurch die jeweilige Spule 6', 8' ein hochfrequentes elektromagnetisches Wechselfeld erzeugt. Die Einrichtungen 6" und 8" weisen hierzu jeweils einen Schwingkreis mit einem Inverter und insbesondere einem Kondensator auf. Mittels des Inverters lässt sich in dem Schwingkreis eine gewünschte Schwingung zum Erzeugen des hochfrequenten elektromagnetischen Wechselfeldes auf einfache und bekannte Art und Weise in Form einer Resonanzfrequenz erzeugen. Der Inverter wird dabei derart angesteuert, dass der Schwingkreis mit seiner Induktivität auf der Resonanzfrequenz schwingt. Durch eine Rotation der Lenkwelle 3 wird einer der Metallkörper 4 in den Bereich des Wechselfelds des Wirbelstromsensors 6 hinein oder aus dem Bereich des Wechselfelds hinaus verfahren. Das elektromagnetische Wechselfeld induziert Wirbelströme in dem Metallkörper 4, die wiederum ein eigenes elektromagnetisches Feld erzeugen, das sich zurück auf die Spule 6' auswirkt. Insbesondere führt das durch die Wirbelströme erzeugte Wechselfeld zu einer Impedanzänderung in der Spule 6', die durch die entsprechende, zur Impedanzerfassung notwendige Mittel aufweisende Einrichtung 6" erfasst wird. Entsprechendes gilt für den Referenz-Wirbelstromsensor 8. Dieser ist jedoch derart ausgerichtet, dass das von ihm erzeugte hochfrequente Wechselfeld nicht in den Bereich der Metallkörper 4 gelangt und insofern frei schwingt. Jedoch wird auch hier mittels der Einrichtung 8"die Impedanz der Spule 8' erfasst.

Die Einrichtungen 6" und 8" erzeugen ein Impedanzsignal, das an die Auswerteinrichtung 7 geleitet wird. Diese weist einen Flipflop-Baustein 9 auf, dem die Impedanz-Signale zugeführt werden. Mittels des Flipflop-Bausteins 9 werden die Impedanz-Signale additiv überlagert, wodurch eine sogenannte Schwebung erzeugt wird. Im Vergleich zu den Impedanz-Signalen weist die Schwebung eine viel geringere Frequenz auf. An die Auswerteeinrichtung 7 oder an einen Mikroprozessor der Auswerteeinrichtung 7 werden daher geringere Anforderungen an die Arbeitsfrequenz gestellt, wodurch Kosten und Herstellungsaufwand für die Sensoreinrichtung 5 gering gehalten werden können.

Der Flipflop-Baustein 9 ist zweckmäßigerweise als Master-Slave-Flipflop ausgebildet und weist einen Takteingang auf, dem die Frequenz eines ersten des Schwingkreises der Einrichtung 6" zugeführt wird, wobei die Frequenz des Schwingkreises der Referenzeinrichtung 8" einem Mastereingang des Flipflops 9 zugeführt wird. An einem Slave-Ausgang des Flipflop-Bausteins 9 liegt dann das Signal der Schwebung an und kann durch die Auswerteeinrichtung 7 zum Bestimmen der Lage des sich in dem elektromagnetischen Wechselfeld des Wirbelstromsensors 6 befindlichen Metallkörpers 4 und damit der Winkellage der Lenkwelle 3 genutzt werden.

## Patentansprüche

1. Sensoreinrichtung (5) zum Bestimmen der Lage eines Metallkörpers (4), insbesondere eines Stellglieds (2) einer Lenkeinrichtung eines Kraftfahrzeugs, mit wenigstens einem Wirbelstromsensor (6), der eine Spule (6') zum Erzeugen eines hochfrequenten elektromagnetischen Wechselfeldes und eine Einrichtung (6") zum Betreiben der Spule (6') und Erfassen einer Impedanz der Spule (6') aufweist, und mit einer Auswerteeinrichtung (7), die anhand der erfassten Impedanz die Lage des Metallkörpers (4) bezüglich der Spule (6') bestimmt, ferner mit einem Referenz-Wirbelstromsensor (8), der eine Referenzspule (8') zum Erzeugen eines hochfrequenten elektromagnetischen Wechselfeldes und eine Referenzeinrichtung (8") zum Betreiben der Referenzspule (8') und zum Erfassen einer Impedanz der Referenzspule (6') aufweist und derart ausgerichtet und/oder ausgebildet ist, dass sein elektromagnetisches Wechselfeld metallkörperfrei ist, wobei die Auswerteeinrichtung (7) dazu ausgebildet ist, aus den erfassten Impedanzen eine Schwebung zu bilden und in Abhängigkeit der Schwebung die Lage des Metallkörpers (4) zu bestimmen.

2. Sensoreinrichtung nach Anspruch 1, **dadurch gekennzeichnet, dass** die Auswerteeinrichtung (7) einen Flipflop-Baustein (9) aufweist.

3. Sensoreinrichtung nach einem der vorhergehenden Ansprüche, **dadurch gekennzeichnet, dass** die Einrichtung (6") und die Referenzeinrichtung (8") jeweils einen Schwingkreis mit einem Inverter aufweisen.

4. Lenkwinkelsensoreinrichtung (1) zum Bestimmen des Lenkwinkels einer Lenkeinrichtung eines Kraftfahrzeugs, mit einem den Lenkwinkel bestimmenden Stellglied (2), insbesondere Lenkwelle (3), auf dem wenigstens ein Metallkörper (4) angeordnet ist, und mit einer Sensoreinrichtung (5) zum Erfassen der Lage des wenigstens einen Metallkörpers (4), **gekennzeichnet durch** die Ausbildung der Sensoreinrichtung (5) nach einem der Ansprüche 1 - 3.

5. Verfahren zum Bestimmen der Lage eines Metallkörpers (4), insbesondere eines Stellglieds einer Lenkeinrichtung eines Kraftfahrzeugs, mittels wenigstens eines Wirbelstromsensors (6), der wenigstens eine Spule (6') aufweist, die zum Erzeugen eines hochfrequenten elektromagnetischen Wechselfeldes mit einem hochfrequenten Wechselstrom gespeist wird, und der eine Einrichtung (6") aufweist, mit der die Spule (6') betrieben und eine Impedanz der Spule (6') erfasst wird, wobei die Lage des Metallkörpers in Abhängigkeit von der erfassten Impedanz der Spule (6') bestimmt wird, wobei ein Referenz-Wirbelstromsensor (8) mit einer Referenzspule (8') und einer Referenzeinrichtung (8") vorgesehen wird, wobei die Spule (8') mit einem hochfrequenten Wechselstrom wie die Spule (6') des Wirbelstromsensors (6) gespeist wird, und wobei eine Impedanz der Referenzspule (8') des Referenz-Wirbelstromsensors (8) mittels der Referenzeinrichtung (8") erfasst wird, und wobei aus den erfassten Impedanzen der Einrichtungen (6",8") eine Schwebung gebildet wird, in deren Abhängigkeit die Lage des Metallkörpers (4) bestimmt wird.

## Claims

1. Sensor device (5) for determining the position of a metal body (4), in particular an actuating member (2) of a steering device of a motor vehicle, having at least one eddy-current sensor (6) which has a coil (6') for generating a high-frequency alternating electromagnetic field and a device (6") for operating the coil (6') and detecting an impedance of the coil (6'), and having an evaluation device (7) which determines the position of the metal body (4) relative to the coil (6') on the basis of the detected impedance, furthermore having a reference eddy-current sensor (8) which has a reference coil (8') for generating a high-frequency alternating electromagnetic field and a reference device (8") for operating the reference coil (8') and detecting an impedance of the reference coil (6') and is set up and/or designed such that the alternating electromagnetic field thereof has no metal bodies therein, wherein the evaluation device (7) is designed to form a beat from the detected impedances and to determine the position of the metal body (4) on the basis of the beat.

2. Sensor device according to Claim 1, **characterized in that** the evaluation device (7) has a flip-flop component (9).

3. Sensor device according to either of the preceding claims, **characterized in that** the device (6") and the reference device (8") each have a resonant circuit with an inverter.

4. Steering-angle sensor device (1) for determining the steering angle of a steering device of a motor vehicle, having an actuating member (2), in particular steering shaft (3), which determines the steering angle and on which at least one metal body (4) is arranged, and having a sensor device (5) for detecting the position of the at least one metal body (4), **characterized by** the sensor device (5) being formed according to any of Claims 1-3.

5. Method for determining the position of a metal body (4), in particular an actuating member of a steering device of a motor vehicle, by means of at least one eddy-current sensor (6) which has at least one coil (6') to which a high-frequency alternating current is fed in order to generate a high-frequency alternating electromagnetic field, and which has a device (6") by which the coil (6') is operated and an impedance of the coil (6') is detected, wherein the position of the metal body (4) is determined on the basis of the detected impedance of the coil (6'), wherein provision is made of a reference eddy-current sensor (8) having a reference coil (8') and a reference device (8"), wherein a high-frequency alternating current is fed to the coil (8'), like the coil (6') of the eddy-current sensor (6), and wherein an impedance of the reference coil (8') of the reference eddy-current sensor (8) is detected by means of the reference device (8"), and wherein a beat is formed from the detected impedances of the devices (6", 8"), on the basis of which beat the position of the metal body (4) is determined.

## Revendications

1. Dispositif capteur (5) destiné à déterminer la position d'un corps métallique (4), notamment d'un actionneur (2) d'un dispositif de direction d'un véhicule automobile, comportant au moins un capteur de courant de Foucault (6) qui comporte une bobine (6') destinée à générer un champ alternatif électromagnétique à haute fréquence et un dispositif (6") destiné à attaquer la bobine (6') et à détecter une impédance de la bobine (6'), et comportant un dispositif d'évaluation (7) qui, sur la base de l'impédance détectée, détermine la position du corps métallique (4) par rapport à la bobine (6'), comportant en outre une capteur de courant de Foucault de référence (8) qui comporte une bobine de référence (8') destinée à générer un champ alternatif électromagnétique à haute fréquence et un dispositif de référence (8") destiné à attaquer la bobine de référence (8') et à détecter une impédance de la bobine de référence (6') et est orienté et/ou réalisé de manière à ce que son champ alternatif électromagnétique soit dépourvu de corps métallique, dans lequel le dispositif d'évaluation (7) est réalisé de manière à créer une interférence à partir des impédances détectées et à déterminer la position du corps métallique (4) en fonction de l'interférence.

2. Dispositif capteur selon la revendication 1, **caractérisé en ce que** le dispositif d'évaluation (7) comporte un composant bascule (9).

3. Dispositif capteur selon l'une quelconque des revendications précédentes, **caractérisé en ce que** le dispositif (6") et le dispositif de référence (8") comportent respectivement un circuit oscillant comportant un onduleur.

4. Dispositif capteur d'angle de braquage (1) destiné à déterminer l'angle de braquage d'un dispositif de direction d'un véhicule automobile, comportant un actionneur (2) déterminant l'angle de braquage, notamment de l'arbre de direction (3), sur lequel est disposé au moins un corps métallique (4), et comportant un dispositif capteur (5) destiné à détecter la position de l'au moins un corps métallique (4), **caractérisé par** la réalisation du dispositif capteur (5) selon l'une quelconque des revendications 1 - 3.

5. Procédé pour déterminer la position d'un corps métallique (4), notamment d'un actionneur d'un dispositif de direction d'un véhicule automobile, au moyen d'au moins un capteur de courant de Foucault (6) comportant au moins une bobine (6') qui est alimentée avec un courant alternatif à haute fréquence pour générer un champ alternatif électromagnétique à haute fréquence, et qui comporte un dispositif (6") à l'aide duquel la bobine (6') est attaquée et une impédance de la bobine (6') est détectée, dans lequel la position du corps métallique est déterminée en fonction de l'impédance détectée de la bobine (6'), dans lequel il est prévu un capteur de courant de Foucault de référence (8) comportant une bobine de référence (8') et un dispositif de référence (8"), dans lequel la bobine (8') est alimentée avec un courant alternatif à haute fréquence comme la bobine (6') du capteur de courant de Foucault (6), et dans lequel une impédance de la bobine de référence (8') du capteur de courant de Foucault de référence (8) est détectée au moyen du dispositif de référence (8"), et dans lequel une interférence est créée à partir des impédances détectées du dispositif (6", 8"), en fonction de laquelle la position du corps métallique (4) est déterminée.
